# FASCICULE DE BREVET EUROPEEN

(11) **EP 4 514 600 B1**
(45) Date de publication et mention de la délivrance du brevet: **01.04.2026**
(21) Numéro de dépôt: 23725374.5
(22) Date de dépôt: 25.04.2023
(51) Int. Cl.: B29B 11/16, B29D 99/00, B29C 33/76, D03D 11/02, D03D 1/00, B64F 5/10, B64C 11/26, B29C 70/86, B29C 70/24, B29C 33/52, B29C 70/48, B29L 31/08

(54) **AUBE OU PALE D'HÉLICE AVEC PIED COMPOSITE CREUX**
PROPELLERBLATT ODER -SCHAUFEL MIT HOHLEM VERBUNDFUSS
PROPELLER BLADE OR AIRFOIL WITH HOLLOW COMPOSITE ROOT

(30) Priorité: 26.04.2022 FR 2203868
(43) Date de publication de la demande: 05.03.2025
(73) Titulaire: SAFRAN, 75015 Paris (FR); SAFRAN AIRCRAFT ENGINES, 75015 Paris (FR)
(72) Inventeur: FAIVRE D'ARCIER, Pierre, Jean, 77550 MOISSY-CRAMAYEL (FR); POSTEC, Clément, Pierre, 77550 MOISSY-CRAMAYEL (FR); MAISON, Vincent, 77550 MOISSY-CRAMAYEL (FR); MINERVINO, Mattéo, 77550 MOISSY-CRAMAYEL (FR)
(74) Mandataire: Cabinet Beau de Loménie
(86) Numéro de dépôt international: PCT/FR2023/000054
(87) Numéro de publication internationale: WO 2023/209289

(56) Documents cités:
- FR-A1- 2 732 406
- US-A1- 2015 040 396
- US-A1- 2019 217 943
- US-A1- 2019 323 357

## Description

### Domaine Technique

La présente invention se rapporte au domaine des aubes ou pales d'hélice pour aéronefs telles que celles présentes sur les turbopropulseurs.

### Technique antérieure

Les aubes ou pales d'hélice pour turbopropulseurs sont généralement réalisées en matériau métallique. Si les aubes ou pales d'hélice en matériau métallique ont une bonne résistance mécanique, elles présentent toutefois l'inconvénient d'avoir une masse relativement importante.

Afin d'obtenir des aubes ou pales d'hélice plus légères, il est connu de réaliser des pales d'hélice en matériau composite, c'est-à-dire en réalisant des pièces de structure à renfort fibreux densifié par une matrice.

Le document US 2013/0017093 décrit la réalisation d'une pale d'hélice à partir d'une structure fibreuse à profil aérodynamique à l'intérieur de laquelle est introduite une partie d'un longeron, une extrémité du longeron étant prolongée par une portion renflée destinée à former le pied de la pale d'hélice.

Le document US 2019/323357 A1 décrit une aube comprenant une structure en matériau composite comprenant un renfort fibreux obtenu par tissage tridimensionnel et une matrice dans laquelle est noyé le renfort fibreux, la structure en matériau composite comprenant une partie de pale à profil aérodynamique et une partie de pied d'aube, la partie de pied d'aube comprenant deux portions reliées chacune à la partie de pale, une pièce d'attache de pied d'aube comprenant une paroi délimitant une cavité et une ouverture formée dans la paroi, la structure en matériau composite s'étendant à travers l'ouverture de telle sorte que la partie de pale est située à l'extérieur de la pièce d'attache et la partie de pied d'aube est située à l'intérieur de la cavité, et une pièce de blocage disposée dans la cavité, entre les deux portions de la partie de pied d'aube, pour maintenir les deux portions écartées l'une de l'autre de manière à s'opposer à un retrait de la partie de pied d'aube de la cavité via l'ouverture.

La nouvelle génération de moteurs nécessite des pieds d'aube ou de pale plus compacts. Ce besoin vient de la nécessité de pouvoir faire pivoter l'aube ou la pale autour de son axe vertical afin d'adapter son incidence au régime de vol (aube ou pale à pas variable). Ce besoin, combiné au fait que l'aube ou la pale doit être intégrée le plus bas possible sur le disque, impose de réduire fortement l'encombrement du pied.

A cet effet, les pieds des aubes ou pales de nouvelle génération présentent une forme axisymétrique ou sensiblement axisymétrique ainsi que des dimensions réduites contrairement aux pieds de l'art antérieur comme ceux décrits dans le document US 2013/0017093 qui s'étendent sur toute la largeur de la partie inférieure l'aube ou pale.

Cette forme axisymétrique ou quasi-axisymétrique est plus difficile à fabriquer en matériau composite, en particulier lorsque le tissage tridimensionnel (3D) est utilisé pour former le renfort fibreux de l'aube ou de la pale.

Par ailleurs, les chargements mécaniques auxquels sont soumis les pieds de nouvelle génération imposent des contraintes supplémentaires. En effet, outre des chargements mécaniques en traction et en flexion habituellement rencontrés (causés respectivement par les efforts centrifuges et les impacts avec des objets), les pieds de nouvelle génération peuvent être intégrés dans le disque du rotor à l'aide de coquilles métalliques, ce qui entraîne un chargement mécanique supplémentaire en compression circonférentielle.

### Exposé de l'invention

Il est donc souhaitable de pouvoir proposer une solution pour la réalisation d'aubes ou pales d'hélice d'aéronef en matériau composite avec un pied compact et apte à résister aux différents chargements mécaniques.

A cet effet, la présente invention propose un procédé de fabrication d'une aube ou pale d'hélice de turbopropulseur en matériau composite comprenant un renfort fibreux densifié par une matrice, le procédé comprenant :
- la réalisation par tissage tridimensionnel d'une ébauche fibreuse en une seule pièce, l'ébauche fibreuse présentant une forme plate s'étendant suivant une direction longitudinale et une direction transversale correspondant respectivement à la direction d'envergure et à la direction de corde de l'aube ou la pale d'hélice à fabriquer, l'ébauche fibreuse comprenant une partie de pied et une partie de profil aérodynamique s'étendant suivant la direction longitudinale à partir de la partie de pied et suivant la direction transversale entre une portion de bord d'attaque et une portion de bord de fuite,
- la mise en forme de l'ébauche fibreuse pour obtenir une préforme fibreuse en une seule pièce ayant ladite partie de profil aérodynamique formant préforme de profil aérodynamique et ladite partie de pied formant préforme de pied, et
- la densification de la préforme par une matrice pour obtenir une aube ou une pale d'hélice en matériau composite ayant un renfort fibreux constitué par la préforme fibreuse et densifié par la matrice, et formant une seule pièce avec pied intégré, caractérisé en ce que la partie de pied de l'ébauche fibreuse comprend une déliaison délimitant un logement interne de pied débouchant à une extrémité libre de ladite partie de pied et s'étendant suivant la direction longitudinale et en ce que la mise en forme de l'ébauche fibreuse comprend le positionnement d'au moins un élément d'insertion dans le logement interne de pied de manière à former une partie de préforme de pied en forme de bulbe.

Le procédé de l'invention permet ainsi de réaliser une pale d'hélice ou une aube avec un pied composite qui est à la fois compact et parfaitement adapté pour résister aux différents chargements mécaniques décrits précédemment. En effet, la partie de renfort fibreux du pied est réalisée en tissage 3D et présente une forme de bulbe qui est reliée à la partie de renfort fibreux du profil aérodynamique en son centre ou ailleurs. On obtient ainsi un pied composite bien plus compact que celui de l'art antérieur qui s'étend généralement sur toute la largeur de la partie inférieure du profil aérodynamique. Dans ce pied composite, il y a des fils, par exemple des fils de chaîne, orientés dans la direction d'envergure de la pale ou de l'aube qui confère à celle-ci une bonne résistance mécanique en traction et en flexion par combinaison avec le tissage 3D. En outre, dans le pied composite, il y a des fils, par exemple des fils de trame, orientés dans la direction de corde de la pale ou de l'aube qui confère à celle-ci une bonne résistance mécanique en compression circonférentielle.

Par ailleurs, la forme en bulbe permet d'obtenir un pied ayant une forme axisymétrique ou quasi-axisymétrique compatible avec une intégration dans un système de rotation ou changement de pas d'hélice.

En réalisant ainsi un renfort fibreux dans lequel une partie de pied est intégralement formée, c'est-à-dire tissée en une seule pièce, avec une partie de profil aérodynamique, on assure une très bonne tenue mécanique de l'ensemble de la pièce et, en particulier, au niveau de la liaison entre le pied et le profil aérodynamique.

Selon un mode de réalisation du procédé de l'invention, la densification de la préforme comprend le placement de la préforme fibreuse dans un outillage d'injection présentant la forme de l'aube ou de la pale d'hélice à fabriquer, la densification comprenant en outre l'injection d'une résine dans la préforme fibreuse maintenue dans l'outillage d'injection, la transformation de la résine en matrice par traitement thermique et le démoulage de l'aube ou de la pale d'hélice, le démoulage comprenant le retrait dudit au moins un élément d'insertion de manière à obtenir un pied creux.

Selon un autre mode de réalisation du procédé de l'invention, la densification de la préforme comprend le placement de la préforme fibreuse dans un outillage d'injection présentant la forme de l'aube ou de la pale d'hélice à fabriquer, la densification comprenant en outre l'injection d'une résine dans la préforme fibreuse maintenue dans l'outillage d'injection, la transformation de la résine en matrice par traitement thermique et le démoulage de l'aube ou de la pale d'hélice de manière à obtenir un pied comprenant une cavité avec ledit au moins un élément d'insertion collé à l'intérieur de ladite cavité.

Selon un aspect du procédé de l'invention, une portion inférieure de la partie de profil aérodynamique de l'ébauche fibreuse comprend une déliaison délimitant un passage entre un bord de ladite partie de profil aérodynamique et le logement interne de pied, ledit logement interne de pied comportant suivant la direction longitudinale une première portion dont la section décroît entre l'extrémité libre de la partie de pied et une partie intermédiaire du logement et une deuxième portion dont la section croît entre ladite portion intermédiaire et la partie de profil aérodynamique, une première partie de l'élément d'insertion présentant une forme évasée étant positionnée dans la première portion du logement interne de pied, une deuxième partie de l'élément d'insertion présentant une forme évasée étant positionnée dans la deuxième portion du logement interne de pied via le passage présent dans la partie de profil aérodynamique.

Selon un autre aspect du procédé de l'invention, l'élément d'insertion est constitué d'un des matériaux suivants : matériau métallique, résine et sel.

L'invention a également pour objet une aube ou pale d'hélice de turbopropulseur en matériau composite comprenant un renfort fibreux densifié par une matrice, l'aube ou la pale d'hélice comportant suivant une direction d'envergure un pied et un profil aérodynamique, le renfort fibreux comprenant une préforme fibreuse présentant un tissage tridimensionnel avec une partie de préforme de pied présente dans le pied et une partie de préforme de profil aérodynamique présente dans le profil aérodynamique, les parties de préforme de pied et de profil aérodynamique étant liées l'une à l'autre par le tissage tridimensionnel, caractérisée en ce que la partie de préforme de pied de la préforme fibreuse comprend une déliaison délimitant un logement interne de pied formant une cavité débouchant à une extrémité libre du pied.

Selon un aspect de l'aube ou pale d'hélice de l'invention, celle-ci comprend en outre au moins un élément d'insertion collé à l'intérieur de la cavité présente dans le pied de l'aube ou de la pale d'hélice.

Selon un aspect de l'aube ou pale d'hélice de l'invention, la cavité du pied comporte suivant la direction d'envergure une première portion dont la section décroît entre l'extrémité libre du pied et une partie intermédiaire du logement et une deuxième portion dont la section croît entre ladite portion intermédiaire et le profil aérodynamique, une première partie de l'élément d'insertion présentant une forme évasée étant présente dans la première portion de la cavité, une deuxième partie de l'élément d'insertion présentant une forme évasée étant présente dans la deuxième portion du la cavité.

L'invention couvre en outre un moteur aéronautique comprenant une pluralité d'aubes ou de pales d'hélice selon l'invention ainsi qu'un aéronef comprenant au moins un tel moteur.

### Brève description des dessins

[Fig. 1] La figure 1 est une vue schématique illustrant le tissage 3D d'une ébauche fibreuse pour la fabrication d'une aube,
[Fig. 2] La figure 2 est une vue en coupe en sens trame à échelle agrandie d'un ensemble de couches de fils montrant la formation de deux déliaisons dans la partie de pied de l'ébauche de la figure 1 selon un plan de coupe II-II,
[Fig. 3] La figure 3 est une vue en coupe en sens trame à échelle agrandie d'un ensemble de couches de fils montrant la formation de deux déliaisons dans la partie de pied de l'ébauche de la figure 1 selon un plan de coupe III-III,
[Fig. 4] La figure 4 est une vue schématique en perspective montrant la mise en forme d'une partie de préforme de pied dans l'ébauche fibreuse de la figure 1,
[Fig. 5] La figure 5 est une vue schématique en perspective éclatée montrant un outillage d'injection et le placement de la préforme fibreuse à l'intérieur de celui-ci conformément à un mode de réalisation de l'invention,
[Fig. 6] La figure 6 est une vue schématique en perspective montrant l'outillage d'injection de la figure 5 fermé,
[Fig. 7] La figure 7 est une vue schématique en perspective d'une aube en matériau composite obtenue conformément à un mode de réalisation de l'invention,
[Fig. 8] La figure 8 est une vue schématique en perspective d'une aube en matériau composite obtenue conformément à un autre mode de réalisation de l'invention,
[Fig. 9] La figure 9 est une vue schématique en perspective d'une ébauche fibreuse conformément à autre un mode de réalisation de l'invention,
[Fig. 10] La figure 10 est une vue schématique en perspective montrant la mise en forme de l'ébauche fibreuse de la figure 9,
[Fig. 11] La figure 11 est une vue schématique en perspective d'une aube en matériau composite obtenue conformément à un autre mode de réalisation de l'invention.

### Description des modes de réalisation

L'invention s'applique d'une manière générale à différents types d'aubes ou pales d'hélice utilisées dans des moteurs d'aéronefs. L'invention trouve une application avantageuse mais non exclusive dans des aubes ou pales d'hélice de grandes dimensions qui sont destinées à être intégrées à des systèmes de pivotement ou pas variable. De telles aubes ou pales d'hélice sont en général munies d'un pied présentant à la fois un faible encombrement (forme compacte) et une bonne une résistance vis-à-vis d'efforts en traction, flexion et compression circonférentielle. L'aube selon l'invention peut notamment constituer une aube pour roues mobiles carénées telles que des aubes de soufflante ou une aube pour roues mobiles non carénées comme dans les moteurs aéronautiques dits « open rotor ».

Dans la suite de la description, les exemples de réalisation sont décrits en relation avec des aubes pour turbopropulseur. Toutefois, les exemples de réalisation s'appliquent également à des pales d'hélice pour aéronefs.

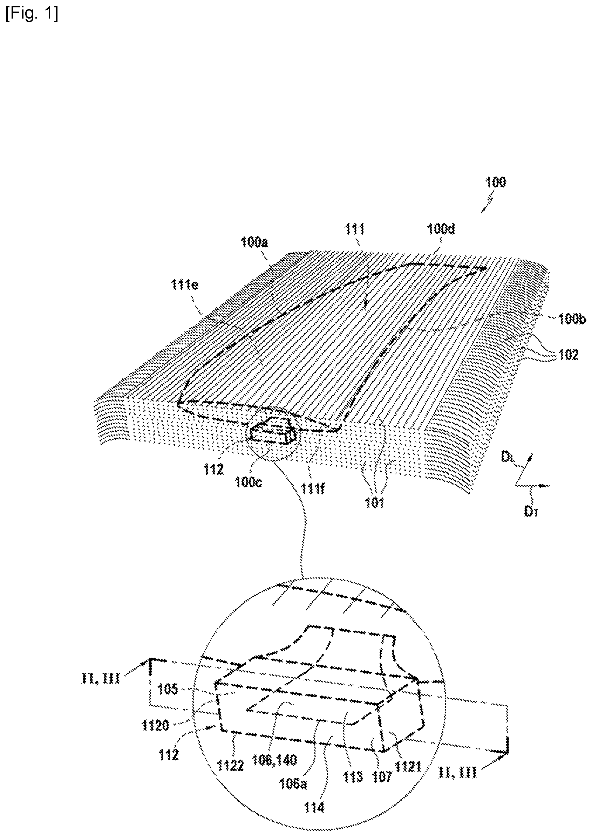

La figure 1 montre très schématiquement une ébauche fibreuse 100 destinée à former la préforme fibreuse d'une aube à réaliser.

L'ébauche de structure fibreuse 100 est obtenue, comme illustrée schématiquement sur la figure 1, par tissage tridimensionnel (3D) réalisé de façon connue au moyen d'un métier à tisser de type jacquard sur lequel on a disposé un faisceau de fils de chaînes 101 ou torons en une pluralité de couches de plusieurs centaines de fils chacune, les fils de chaînes étant liés par des fils de trame 102. L'ébauche de structure fibreuse 100 est tissée en une seule pièce, l'ébauche s'étendant dans une direction longitudinale D_{L}, correspondant à la direction d'envergure de l'aube à fabriquer, entre une partie inférieure 100c et une partie supérieure 100d et dans une direction transversale D_{T}, correspondant à la direction de corde de l'aube à fabriquer entre un bord avant 100a et un bord arrière 100b, l'ébauche comprenant une partie de profil aérodynamique 111 définissant deux faces 111e et 111f destinées à former respectivement les faces extrados et intrados de l'aube et une partie de pied 112 destinée à former ultérieurement un pied d'aube et s'étendant à l'extérieur de l'ébauche de profil aérodynamique 111 suivant la direction longitudinale D_{L} et en retrait des bords avant et arrière 100a et 100b suivant la direction transversale D_{T}. Dans l'exemple illustré, le tissage 3D est un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

D'autres types de tissage tridimensionnel connus pourront être utilisés, comme notamment ceux décrits dans le document WO 2006/136755.

Ce document décrit notamment la réalisation par tissage en une seule pièce de structures fibreuses de renfort pour des pièces telles que des aubes ayant un premier type d'armure à cœur et un deuxième type d'armure en peau qui permettent de conférer à la fois les propriétés mécaniques et aérodynamiques attendues pour ce type de pièce.

L'ébauche fibreuse selon l'invention peut être tissée notamment à partir de fils de fibres de carbone ou de céramique tel que du carbure de silicium.

Au fur et à mesure du tissage de l'ébauche fibreuse dont l'épaisseur et la largeur varient, un certain nombre de fils de chaîne ne sont pas tissés, ce qui permet de définir le contour et l'épaisseur voulue, continûment variable, de l'ébauche 100. Un exemple de tissage 3D évolutif permettant notamment de faire varier l'épaisseur de l'ébauche entre un premier bord destiné à former le bord d'attaque et un deuxième bord d'une épaisseur moindre et destiné à former le bord de fuite est décrit dans le document US 2006/257260.

Conformément à l'invention, lors du tissage, une déliaison 106 est réalisée à l'intérieur de la partie de pied 112 l'ébauche fibreuse 100 entre deux couches successives de fils de chaîne. La déliaison 106 s'étend suivant un plan parallèle à la surface de l'ébauche fibreuse et sur une zone de déliaison délimitée par un contour 106a séparant localement la partie de pied 112 en deux portions tissées 113 et 114. En outre, la déliaison 106 s'étend dans la direction transversale entre un premier bord latéral 1120 et un deuxième bord latéral 1121 et en retrait de ces bords (c'est-à-dire la déliaison 106 ne débouche pas sur les bords latéraux 1120 et 1121) de manière à conserver des portions de liaison 105 et 107 adjacentes respectivement aux premier et deuxième bords latéraux 1120 et 1121. La déliaison 106 débouche en outre à l'extrémité inférieure libre 1122 de la partie de pied 112. La déliaison 106 forme ainsi un logement interne 140 dans la partie de pied 112 qui est accessible par l'extrémité inférieure libre 1122.

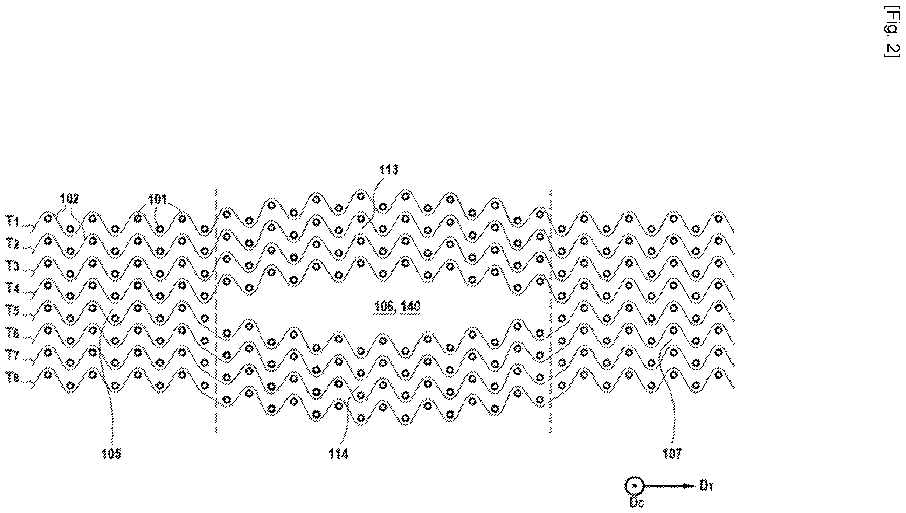

Un mode de tissage 3D à armure interlock de l'ébauche 100 est montré schématiquement par la figure 2. La figure 2 est une vue partielle agrandie d'un plan en coupe chaîne dans une partie de l'ébauche 100 comportant la zone de déliaison 106 (coupe II-II sur la figure 1). Dans cet exemple, l'ébauche 100 comprend 8 couches de fils de chaîne 101 s'étendant sensiblement dans la direction longitudinale D_{L}. Sur la figure 2, les 8 couches de fils de chaîne sont liées par des fils de trame T₁ à T₈ dans les zones de liaison 105 et 107 de la partie de pied 112 de l'ébauche fibreuse 100, les fils de trame s'étendant sensiblement dans la direction transversale D_{T}. Au niveau de la déliaison 106, la portion tissé 113 comprend 4 couches de fils de chaîne 101 liées entre elles par 4 fils de trame T₁ à T₄ tandis que la potion tissée 114 comprend les 4 couches de fils de chaîne formant l'ensemble de couches de fils 109 sont liés par 4 fils de trame T₅ à T₈.

En d'autres termes, le fait que les fils de trame T₁ à T₄ ne s'étendent pas dans les couches de fils de chaîne de la portion tissée 114 et que les fils de trame T₅ à T₈ ne s'étendent pas dans les couches de fils de chaîne de la portion tissée 113 assure la déliaison 106 qui sépare les portions tissées 113 et 114.

Dans l'exemple de tissage présenté sur la figure 2, les fils de trame T₁ à T₄, d'une part, et les fils de trame T₅ à T₈, d'autre part, sont respectivement disposés de chaque côté de la déliaison 106, les fils de trame T₁ à T₄ liant les quatre premières couches de fils de chaîne formant la portion tissée 113 et les fils de trame T₅ à T₈ liant les quatre dernières couches de fils de chaîne formant la portion tissée 114.

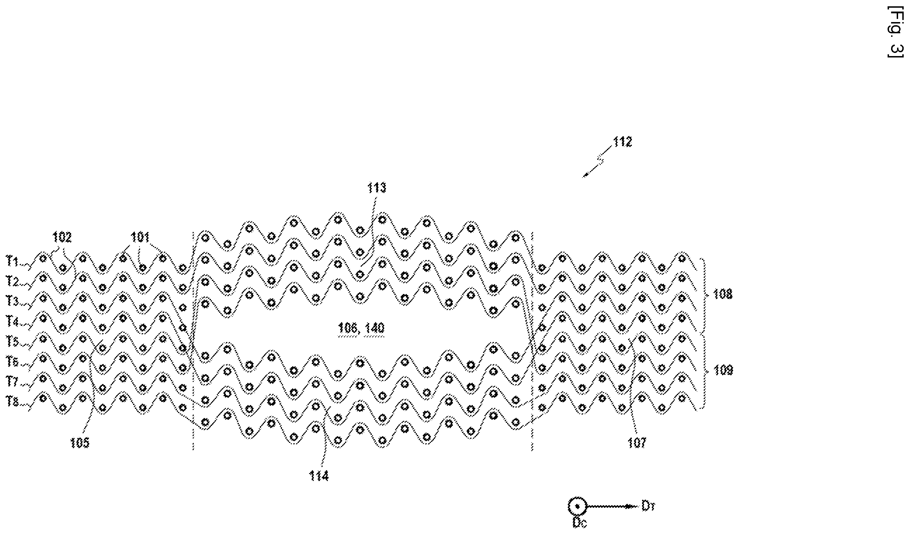

Selon une variante de réalisation illustrée en figure 3 (coupe III-III sur la figure 1), une première partie de fils des couches de fils de trame croise une deuxième partie de fils des couches de fils de trame dans une zone de l'ébauche fibreuse 100 située au voisinage de déliaison 106 suivant la direction transversale D_{T}, les fils de la première partie de fils de trame 102 s'étendant d'un côté de la déliaison 106 suivant la direction transversale D_{T} tandis que les fils de la deuxième partie de fils de la pluralité de couches de fils de trame 102 s'étendent de l'autre côté de la déliaison 106 suivant la direction transversale D_{T}. Plus précisément, un ou plusieurs fils de trame 102 liant des couches de fils de chaîne formant un ensemble de couches de fils 108 dans la zone de liaison 105 sont utilisés pour lier des couches de fils de chaîne formant un ensemble de couches de fils 109 dans les zones de liaison 107 et inversement. Dans l'exemple illustré sur la figure 3, les fils de trame T₃ et T₄, liant des couches de fils de chaîne 101 de l'ensemble de couches de fils 108 dans la première zone de liaison 105 sont déviés au début ou en amont de déliaison 106 suivant la direction transversale D_{T} pour lier des couches de fils de chaîne 101 de l'ensemble de couches de fils 109. De même, les fils de trame T₅ et T₆, liant des couches de fils de chaîne 101 de l'ensemble de couches de fils 109 dans la première zone de liaison 105 sont déviés au début ou en amont de la déliaison 106 suivant la direction transversale D_{T} pour lier des couches de fils de chaîne 101 de l'ensemble de couches de fils 108. Après la déliaison 106, les fils de trame T₃ et T₄ sont de nouveau déviés à la fin ou en aval de la déliaison 106 suivant la direction transversale D_{T}, c'est-à-dire à leur entrée dans la deuxième zone de liaison 107, pour lier des couches de fils de chaîne 101 de l'ensemble de couches de fils 109 tandis que les fils de trame T₅ et T₆ sont de nouveau déviés à la fin ou en aval de la déliaison 106 suivant la direction transversale D_{T}, c'est-à-dire à leur entrée dans la deuxième zone de liaison 107, pour lier des couches de fils de chaîne 101 de l'ensemble de couches de fils 108. Le croisement des fils de trame T₃ et T₄ et des fils de trame T₅ et T₆ en amont et/ou en aval de la déliaison 106 suivant la direction transversale D_{T} permet d'améliorer la tenue de l'ébauche fibreuse dans la zone de déliaison. Selon une variante de réalisation, une partie des fils de trame peuvent se croiser seulement en amont ou en aval de la déliaison 106 suivant la direction transversale D_{T}.

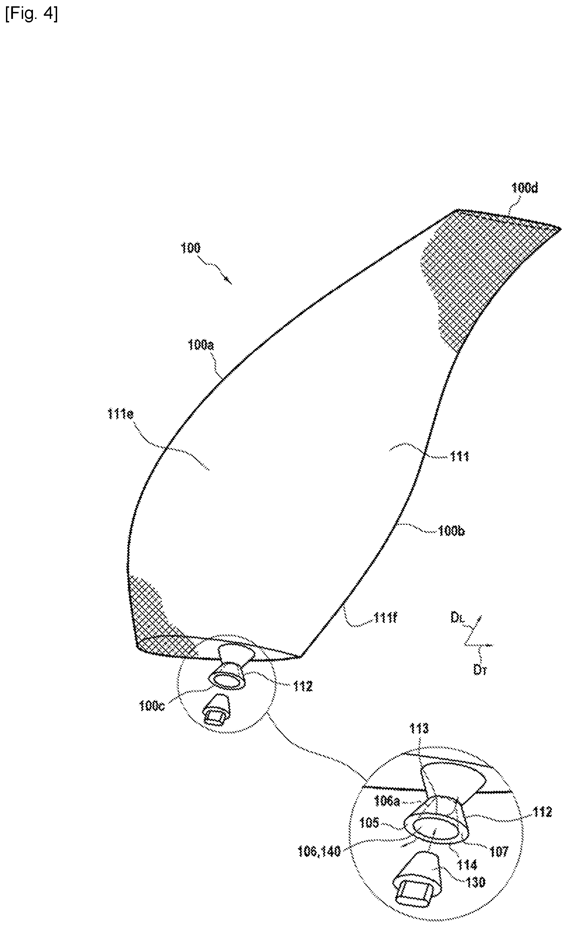

Une fois le tissage terminé, les fils non tissés présents autour de l'ébauche fibreuse 100 sont découpés pour extraire l'ébauche puis on procède à la mise en forme de la partie de pied l'ébauche. Dans l'exemple décrit ici, la mise en forme de la partie de pied 112 est réalisée en écartant les portions tissées 113 et 114 et en introduisant un élément d'insertion 130 dans le logement interne 140 formé par la déliaison 106 comme illustré sur la figure 4. L'élément d'insertion peut être notamment réalisé en matériau métallique ou en résine par fabrication additive par exemple. Il peut également être réalisé avec un sel qui peut être dissout après densification.

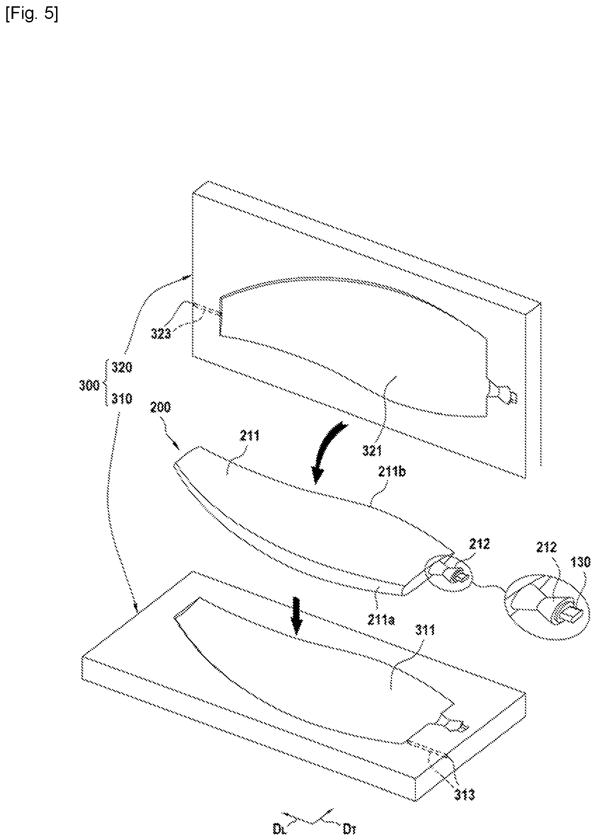

On obtient ainsi une préforme fibreuse 200 comprenant suivant la direction longitudinale D_{L} une partie de préforme de profil aérodynamique 211 et une partie de préforme de pied 212 présentant une forme de bulbe avec un logement interne 240 comprenant l'élément d'insertion 130 comme représentée sur la figure 5. La partie de préforme de profil aérodynamique 211 s'étendant suivant la direction transversale D_{T} entre une partie de bord d'attaque 211a et une partie de bord de fuite 211b.

On procède ensuite à la densification de la préforme fibreuse. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification est réalisée de façon connue en soi suivant le procédé par voie liquide (CVL). Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination un solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

Comme illustré sur la figure 5, l'injection d'une composition liquide précurseur de matrice dans la texture fibreuse ainsi que sa transformation en matrice sont ici réalisées dans un outillage d'injection 300 qui comprend une première coquille 310 comprenant en son centre une première empreinte 311 correspondant en partie à la forme et aux dimensions de l'aube à réaliser et une deuxième coquille 320 comprenant en son centre une deuxième empreinte 321 correspondant en partie à la forme et aux dimensions de l'aube à réaliser.

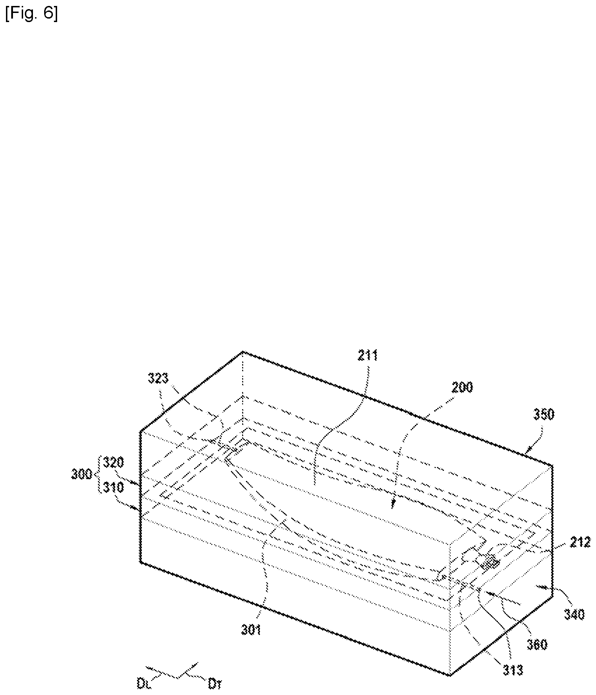

Une fois l'outillage 300 fermé comme illustré sur la figure 6, les première et deuxième empreintes 311 et 321 respectivement des première et deuxième coquilles 310 et 320 définissent ensemble un volume interne 301 ayant la forme de l'aube à réaliser et dans lequel est placée la préforme fibreuse 200. Un compactage de la préforme fibreuse 200 peut être réalisé avec la fermeture de l'outillage 300 afin d'obtenir un taux de fibres déterminé dans la préforme. Dans ce cas, une pression de compactage est appliquée sur les coquilles 310 et 320 par exemple au moyen d'une presse. Le compactage de la préforme fibreuse peut également être réalisé dans un outillage séparé avant l'introduction de la préforme dans l'outillage d'injection.

L'outillage 300 comprend en outre des moyens permettant de réaliser l'injection d'un précurseur liquide de matrice et la transformation de ce précurseur en matrice. Plus précisément, dans l'exemple décrit ici, la première coquille 310 de l'outillage 300 comprend un port d'injection 313 destiné à permettre l'injection d'une composition liquide précurseur de matrice dans la préforme fibreuse tandis que la deuxième coquille comprend un port d'évacuation 323 destiné à coopérer avec un système de pompage pour la mise sous vide de l'outillage et le tirage d'air lors de l'injection. L'outillage d'injection 300 comprend également une partie inférieure 340 et une partie supérieure 350 entre lesquels les première et deuxième coquilles 310 et 320 sont placées, la partie inférieure 340 et la partie supérieure 350 étant équipées de moyens de chauffage (non représentés sur la figure 6).

Une fois l'outillage 300 fermé, on procède au moulage de l'aube en imprégnant la préforme 200 avec une résine thermodurcissable que l'on polymérise par traitement thermique. On utilise à cet effet le procédé bien connu de moulage par injection ou transfert dit RTM ("Resin Transfert Moulding"). Conformément au procédé RTM, on injecte via le port d'injection 313 de la première coquille 310 une résine 360, par exemple une résine thermodurcissable, dans le volume interne occupé par la préforme 200. Le port 323 de la deuxième coquille 320 est relié à un conduit d'évacuation maintenu sous pression (non représentés sur la figure 6). Cette configuration permet l'établissement d'un gradient de pression entre la partie inférieure de la préforme 200 où la résine est injectée et la partie supérieure de la préforme située à proximité du port 323. De cette manière, la résine 360 injectée sensiblement au niveau de la partie inférieure de la préforme va imprégner progressivement l'ensemble de la préforme en circulant dans celle-ci jusqu'au port d'évacuation 323 par lequel le surplus est évacué. Bien entendu, les première et deuxième coquilles 310 et 320 de l'outillage 300 peuvent comprendre respectivement plusieurs ports d'injection et plusieurs ports d'évacuation.

La résine utilisée peut être, par exemple, une résine époxyde de classe de température 180 °C (température maximale supportée sans perte de caractéristiques). Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, l'aube est démoulée. L'élément d'insertion 130 est alors retiré de manière à obtenir un pied d'aube creux. Au final, l'aube est détourée pour enlever l'excès de résine et les chanfreins sont usinés. Aucun autre usinage n'est nécessaire puisque, la pièce étant moulée, elle respecte les cotes exigées.

Les procédés de densification décrits ci-avant permettent de réaliser, à partir de la préforme fibreuse de l'invention, principalement des aubes ou pales d'hélices en matériau composite à matrice organique (CMO), à matrice carbone (C/C) et à matrice céramique (CMC).

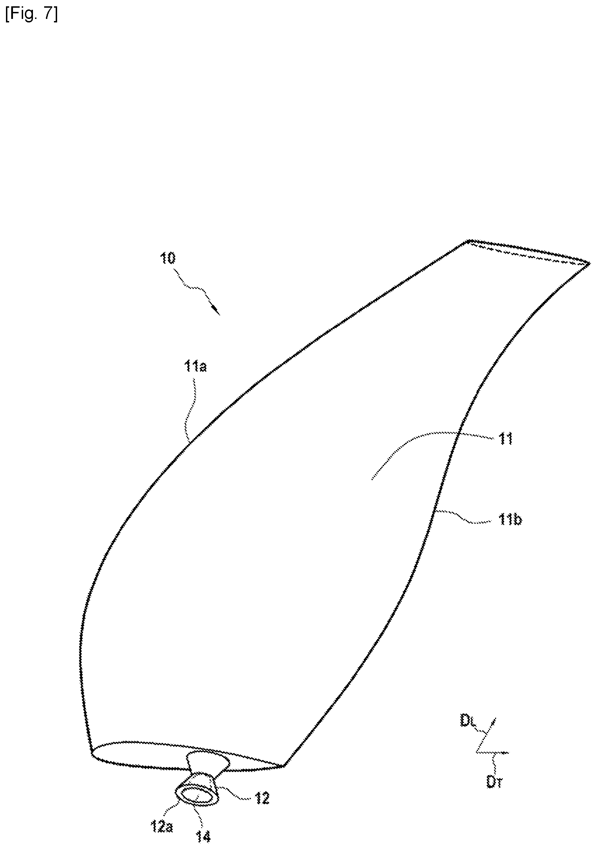

Comme illustrée sur la figure 7, on obtient une aube 10 formée d'un renfort fibreux densifié par une matrice qui comporte dans sa partie inférieure un pied 12 formé par la partie de préforme de pied 212 de la préforme fibreuse 200 et une pale 11 formée par la partie de préforme de pale 211 de la préforme fibreuse 200. L'aube 10 comporte un bord d'attaque 11a et un bord de fuite 11b correspondant respectivement aux parties de bord d'attaque 211a et de bord de fuite 211b de la préforme fibreuse 200. Le pied 12 comprend une cavité 14 formée par le logement interne 240 de la préforme fibreuse 200, la cavité 14 débouchant à l'extrémité libre 12a du pied 12. L'aube 10 comprend ainsi un pied 12 qui présente une forme compacte axisymétrique adaptée pour une intégration dans un système de rotation ou changement de pas d'hélice.

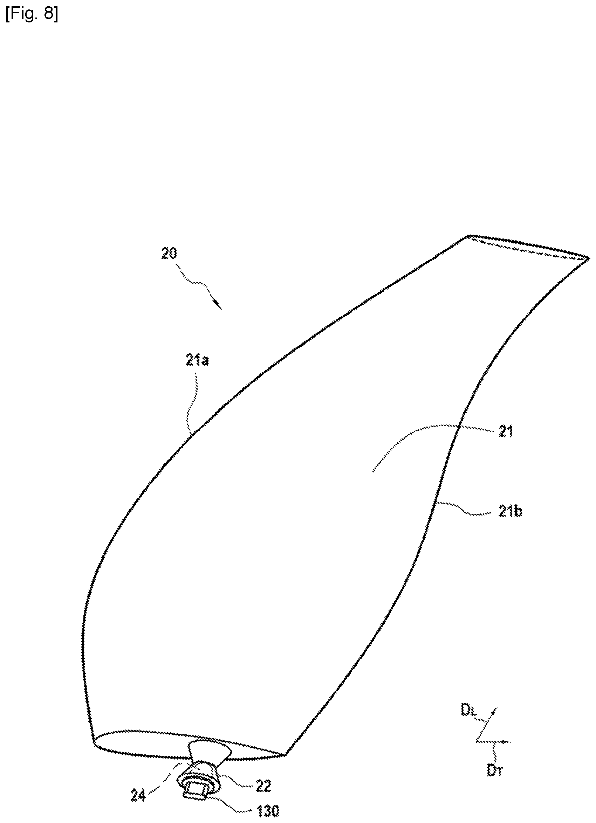

Selon une variante de réalisation, l'élément d'insertion 130 est conservé après démoulage. Dans ce cas, on obtient, comme illustré sur la figure 8, une aube 20 formée d'un renfort fibreux densifié par une matrice qui comporte dans sa partie inférieure un pied 22 formé par la partie de préforme de pied 212 de la préforme fibreuse 200 et une pale 21 formée par la partie de préforme de pale 211 de la préforme fibreuse 200. L'aube 20 comporte un bord d'attaque 21a et un bord de fuite 21b correspondant respectivement aux parties de bord d'attaque 211a et de bord de fuite 211b de la préforme fibreuse 200. Le pied 22 comprend une cavité 24 formée par le logement interne 240 de la préforme fibreuse 200, l'élément d'insertion 130 étant collé à l'intérieur de ladite cavité 24. L'aube 20 comprend ainsi un pied 22 qui présente une forme compacte axisymétrique adaptée pour une intégration dans un système de rotation ou changement de pas d'hélice.

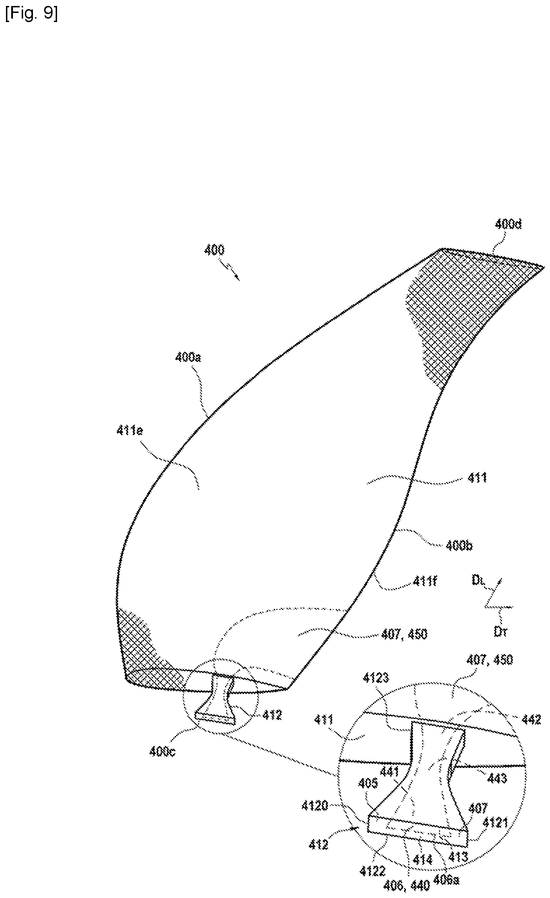

La figure 9 illustre une ébauche fibreuse 400 d'aube selon un autre mode de réalisation. L'ébauche fibreuse 400 est réalisée par tissage 3D dans les mêmes conditions que l'ébauche 100 décrite précédemment. L'ébauche fibreuse 400 diffère de l'ébauche fibreuse 100 déjà décrite en ce que logement interne de pied délimité par la déliaison présente une géométrie en « sablier » ou « diabolo » dans laquelle il n'est pas possible d'introduire un élément d'insertion de forme correspondante à partie de la seule ouverture présente à l'extrémité libre dans la partie de pied de l'ébauche fibreuse. A cet effet, on utilise un élément d'insertion en deux parties tandis que l'ébauche fibreuse comprend une déliaison supplémentaire permettant l'introduction d'une des deux parties de l'élément d'insertion.

Plus précisément, l'ébauche fibreuse 400 s'étend dans une direction longitudinale D_{L}, correspondant à la direction d'envergure de l'aube à fabriquer, entre une partie inférieure 400c et une partie supérieure 400d et dans une direction transversale D_{T}, correspondant à la direction de corde de l'aube à fabriquer entre un bord avant 400a et un bord arrière 400b, l'ébauche comprenant une partie de profil aérodynamique 411 définissant deux faces 411e et 411f destinées à former respectivement les faces extrados et intrados de l'aube et une partie de pied 412 destinée à former ultérieurement un pied d'aube et s'étendant à l'extérieur de l'ébauche de profil aérodynamique 411 suivant la direction longitudinale D_{L} et en retrait des bords avant et arrière 400a et 400b suivant la direction transversale D_{T}.

Conformément à l'invention, lors du tissage, une première déliaison 406 est réalisée à l'intérieur de la partie de pied 412 l'ébauche fibreuse 400 entre deux couches successives de fils de chaîne. La déliaison 406 s'étend suivant un plan parallèle à la surface de l'ébauche fibreuse et sur une zone de déliaison délimitée par un contour 406a séparant localement la partie de pied 412 en deux portions tissées 413 et 414. En outre, la déliaison 406 s'étend dans la direction transversale entre un premier bord latéral 4120 et un deuxième bord latéral 4121 et en retrait de ces bords de manière à conserver des portions de liaison 405 et 407 adjacentes respectivement aux premier et deuxième bords latéraux 4120 et 4121. La déliaison 406 débouche en outre à l'extrémité inférieure libre 4122 de de la partie de pied 412.

La largeur de la déliaison 406 varie entre l'extrémité inférieure libre 4122 de la partie de pied et l'extrémité 4123 de la partie de pied opposée à l'extrémité 4122 suivant la direction longitudinale D_{L}. La déliaison 406 délimite ici un logement interne 440 qui comporte suivant la direction longitudinale D_{L} une première portion 441 dont la section décroît entre l'extrémité libre 4122 de la partie de pied 412 et une partie intermédiaire 443 du logement interne 440 et une deuxième portion 442 dont la section croît entre la portion intermédiaire 443 et la partie de profil aérodynamique 411. La première portion 441 du logement interne 440 est accessible par l'extrémité inférieure libre 4122.

Une déliaison supplémentaire 407 délimitant un passage 450 entre un bord, ici le bord 400b de la partie de profil aérodynamique 411 et le logement interne 440 dans la partie de pied 412. La deuxième partie 442 du logement interne 440 est accessible par le passage 450.

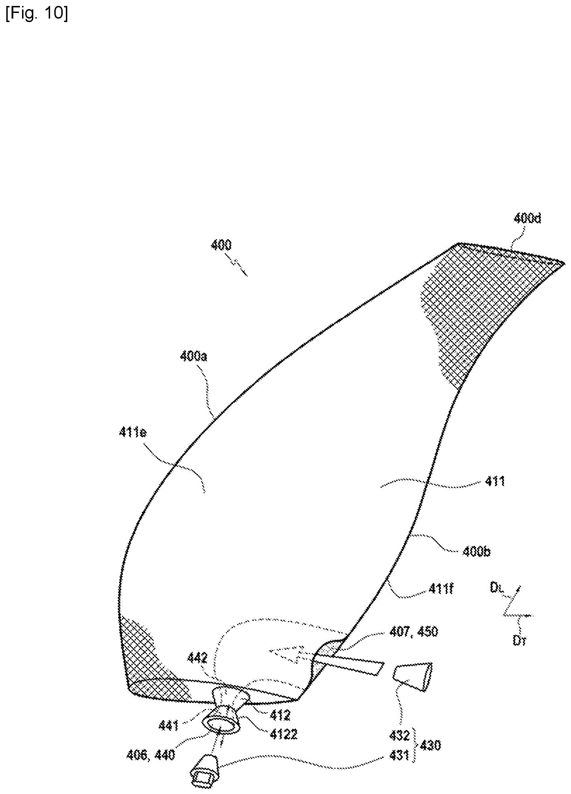

Sur la figure 10, la mise en forme de la partie de pied de l'ébauche fibreuse est réalisée en introduisant une première partie 431 d'un élément d'insertion 430 de forme évasée dans la première portion 441 du logement interne 440 par l'extrémité inférieure libre 4122, d'une part, et en introduisant une deuxième partie 432 de l'élément d'insertion 430 dans la deuxième portion 442 du logement interne 440 par le passage 450.

Une fois la préforme fibreuse ainsi réalisée, elle est placée dans un outillage d'injection afin d'y former une matrice comme expliqué en détails précédemment et qui n'est pas décrit ici une nouvelle fois par souci de simplification.

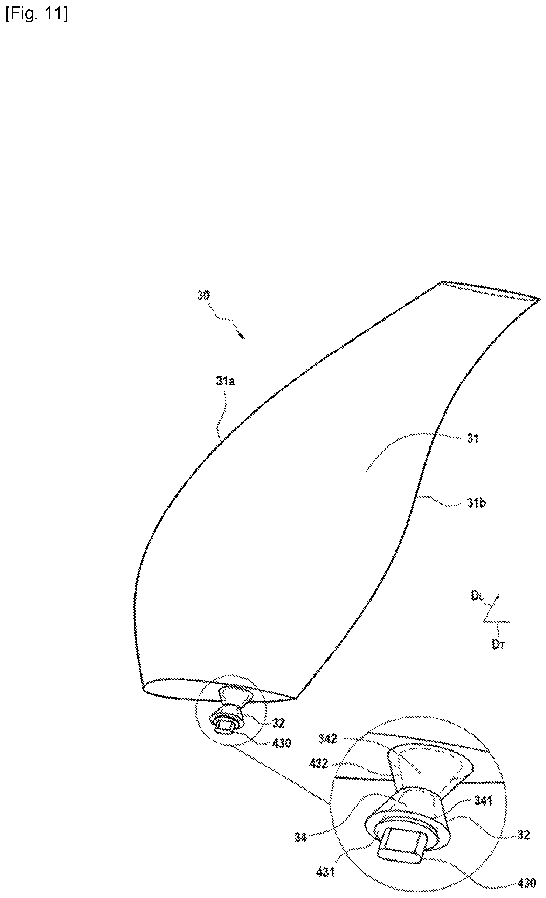

On obtient alors, comme illustré sur la figure 11, une aube 30 formée d'un renfort fibreux densifié par une matrice qui comporte dans sa partie inférieure un pied 32 formé par la partie de préforme de pied de la préforme fibreuse et une pale 31 formée par la partie de préforme de pale de la préforme fibreuse. L'aube 30 comporte un bord d'attaque 31a et un bord de fuite 31b correspondant respectivement aux parties de bord d'attaque et de bord de fuite de la préforme fibreuse. Le pied 32 comprend une cavité 34 formée par le logement interne 440 de la préforme fibreuse 400, la cavité 34 comprenant l'élément d'insertion 430 collé à l'intérieur de ladite cavité 34, la première partie 431 de l'élément d'insertion 430 de forme évasée étant présente et collée dans une première portion 341 de la cavité 34 correspondant à la première portion 441 du logement interne 440 tandis que la deuxième partie 432 de l'élément d'insertion 430 est présente et collée dans une deuxième portion 342 de la cavité 34 correspondant à la deuxième portion 442 du logement interne 440. Les première et deuxième parties 431 et 432 de l'élément d'insertion 430 peuvent être en outre collée au niveau de leur interface de contact. L'aube 30 comprend ainsi un pied 32 qui présente une forme compacte axisymétrique adaptée pour une intégration dans un système de rotation ou changement de pas d'hélice.

La mise en forme du profil aérodynamique des ébauches fibreuses décrites précédemment peut comprendre l'insertion d'une ou plusieurs pièces e de conformation dans une ou plusieurs déliaison réalisées dans le profil aérodynamique. La ou les pièces de conformation sont de préférence constituées d'un matériau rigide léger à faible densité tel qu'un matériau rigide alvéolé.

## Revendications

1. Procédé de fabrication d'une aube ou pale d'hélice (10) de turbopropulseur en matériau composite comprenant un renfort fibreux densifié par une matrice, le procédé comprenant :
- la réalisation par tissage tridimensionnel d'une ébauche fibreuse (100) en une seule pièce, l'ébauche fibreuse présentant une forme plate s'étendant suivant une direction longitudinale (D_{L}) et une direction transversale (D_{T}) correspondant respectivement à la direction d'envergure et à la direction de corde de l'aube ou la pale d'hélice à fabriquer, l'ébauche fibreuse (100) comprenant une partie de pied (112) et une partie de profil aérodynamique (111) s'étendant suivant la direction longitudinale (D_{L}) à partir de la partie de pied et suivant la direction transversale (D_{T}) entre une portion de bord d'attaque (100a) et une portion de bord de fuite (100b),
- la mise en forme de l'ébauche fibreuse (100) pour obtenir une préforme fibreuse (200) en une seule pièce ayant ladite partie de profil aérodynamique (111) formant préforme de profil aérodynamique (211) et ladite partie de pied (112) formant préforme de pied (212), et
- la densification de la préforme fibreuse (200) par une matrice pour obtenir une aube ou une pale d'hélice (10) en matériau composite ayant un renfort fibreux constitué par la préforme fibreuse (200) et densifié par la matrice, et formant une seule pièce avec pied intégré (12),
de sorte que la partie de pied (112) de l'ébauche fibreuse (100) comprend une déliaison (106) délimitant un logement interne de pied (140) débouchant à une extrémité libre (1122) de ladite partie de pied et s'étendant suivant la direction longitudinale (D_{L}), ladite déliaison s'étendant dans la direction transversale entre un premier bord latéral (1120) et un deuxième bord latéral (1121) et en retrait desdits bords latéraux et en ce que la mise en forme de l'ébauche fibreuse (100) comprend le positionnement d'au moins un élément d'insertion (130) dans le logement interne de pied (140) de manière à former une partie de préforme de pied (212) en forme de bulbe.

2. Procédé selon la revendication 1, dans lequel la densification de la préforme comprend le placement de la préforme fibreuse (200) dans un outillage d'injection (300) présentant la forme de l'aube ou de la pale d'hélice à fabriquer, la densification comprenant en outre l'injection d'une résine (360) dans la préforme fibreuse maintenue dans l'outillage d'injection (300), la transformation de la résine en matrice par traitement thermique et le démoulage de l'aube (10) ou de la pale d'hélice, le démoulage comprenant le retrait dudit au moins un élément d'insertion (130) de manière à obtenir un pied creux (12).

3. Procédé selon la revendication 1, dans lequel la densification de la préforme comprend le placement de la préforme fibreuse (200) dans un outillage d'injection (300) présentant la forme de l'aube ou de la pale d'hélice à fabriquer, la densification comprenant en outre l'injection d'une résine (360) dans la préforme fibreuse maintenue dans l'outillage d'injection (300), la transformation de la résine en matrice par traitement thermique et le démoulage de l'aube ou de la pale d'hélice de manière à obtenir un pied (22) comprenant une cavité (24) avec ledit au moins un élément d'insertion (130) collé à l'intérieur de ladite cavité.

4. Procédé selon la revendication 3, dans lequel une portion inférieure de la partie de profil aérodynamique(411) de l'ébauche fibreuse (400) comprend une déliaison (407) délimitant un passage (450) entre un bord (400b) de ladite partie de profil aérodynamique et le logement interne de pied (440), ledit logement interne de pied comportant suivant la direction longitudinale (DL) une première portion (441) dont la section décroît entre l'extrémité libre (4122) de la partie de pied (412) et une partie intermédiaire (443) du logement et une deuxième portion (442) dont la section croît entre ladite portion intermédiaire et la partie de profil aérodynamique (411), une première partie (431) de l'élément d'insertion (430) présentant une forme évasée étant positionnée dans la première portion (441) du logement interne de pied (440), une deuxième partie (432) de l'élément d'insertion présentant une forme évasée étant positionnée dans la deuxième portion (442) du logement interne de pied via le passage (450) présent dans la partie de profil aérodynamique (411).

5. Procédé selon la revendication 3 ou 4, dans lequel l'élément d'insertion (130, 430) est constitué d'un des matériaux suivants : matériau métallique, résine et sel.

6. Aube ou pale d'hélice (10) de turbopropulseur en matériau composite comprenant un renfort fibreux densifié par une matrice, l'aube ou la pale d'hélice comportant suivant une direction d'envergure (D_{L}) un pied (12) et un profil aérodynamique (11), le renfort fibreux comprenant une préforme fibreuse (200) présentant un tissage tridimensionnel avec une partie de préforme de pied (212) présente dans le pied (12) et une partie de préforme de profil aérodynamique (211) présente dans le profil aérodynamique (11), les parties de préforme de pied et de profil aérodynamique étant liées l'une à l'autre par le tissage tridimensionnel, de sorte que la partie de préforme de pied (212) de la préforme fibreuse (200) comprend une déliaison (106) délimitant un logement interne de pied (140) formant une cavité (14) débouchant à une extrémité libre (12a) du pied (12), la déliaison s'étendant suivant une direction transversale entre des première et deuxième portions de liaison (105, 107).

7. Aube ou pale d'hélice (20) selon la revendication 6, comprenant en outre au moins un élément d'insertion (130) collé à l'intérieur de la cavité (24) présente dans le pied (22) de l'aube ou de la pale d'hélice.

8. Aube ou pale d'hélice (30) selon la revendication 6 ou 7, dans laquelle la cavité (34) du pied (32) comporte suivant la direction d'envergure (DL) une première portion (341) dont la section décroît entre l'extrémité libre du pied (32) et une partie intermédiaire du logement et une deuxième portion (342) dont la section croît entre ladite portion intermédiaire et le profil aérodynamique (31), une première partie (431) de l'élément d'insertion (430) présentant une forme évasée étant présent dans la première portion (341) de la cavité (34), une deuxième partie (432) de l'élément d'insertion présentant une forme évasée étant présent dans la deuxième portion (342) de ladite cavité.

9. Moteur aéronautique comprenant une pluralité d'aubes ou de pales d'hélice selon l'une quelconque des revendications 6 à 8.

10. Aéronef comprenant au moins un moteur selon la revendication 9.

## Patentansprüche

1. Verfahren zur Herstellung einer Schaufel oder eines Propellerblatts (10) eines Turboprops aus Verbundmaterial, das eine durch eine Matrix verdichtete Faserverstärkung umfasst, wobei das Verfahren umfasst:
- die Verwirklichung eines Faserrohlings (100) in einem Stück durch dreidimensionale Verwebung, wobei der Faserrohling eine flache Form aufweist, die sich einer Längsrichtung (DL) und einer Querrichtung (DT) folgend erstreckt, die jeweils der Spannweitenrichtung und der Sehnenrichtung der Schaufel oder des Propellerblatts, die/das hergestellt werden soll, entsprechen, wobei der Faserrohling (100) einen Fußteil (112) und einen aerodynamischen Profilteil (111) umfasst, der sich der Längsrichtung folgend (DL) von dem Fußteil weg und der Querrichtung (DT) folgend zwischen einem Vorderkantenabschnitt (100Aa und einem Hinterkantenabschnitt (100b) erstreckt,
- die Formung des Faserrohlings (100), um eine Faservorform (200) in einem Stück zu erhalten, welche den aerodynamischen Profilteil (111), der die Vorform des aerodynamischen Profils (211) bildet, und den Fußteil (112) aufweist, der die Fußvorform (212) bildet, und
- die Verdichtung der Faservorform (200) durch eine Matrix, um eine Schaufel oder ein Propellerblatt (10) aus Verbundmaterial zu erhalten, die eine Faserverstärkung aufweist, die von der Faservorform (200) gebildet wird und durch eine Matrix verdichtet ist, und einen einzelnen Teil mit integriertem Fuß (12) bildet, auf solche Weise, dass der Fußteil (112) des Faserrohlings (100) eine Entbindung (106) umfasst, die eine interne Fußaufnahme (140) begrenzt, die an einem freien Ende (1122) des Fußteils ausmündet und sich der Längsrichtung (DL) folgend erstreckt, wobei die Entbindung sich in der Querrichtung zwischen einem ersten Seitenrand (1120) und einem zweiten Seitenrand (1121) erstreckt und von den Seitenrändern zurückversetzt ist, und dass die Formung des Faserrohlings (100) die Positionierung zumindest eines Einsatzelements (130) in die interne Fußaufnahme (140) auf eine Weise umfasst, um einen Fußvorformteil (212) in Form eines Bulbus zu bilden.

2. Verfahren nach Anspruch 1, wobei die Verdichtung der Vorform die Platzierung der Faservorform (200) in ein Spritzgießwerkzeug (300) umfasst, das die Form der Schaufel oder des Propellerblatts aufweist, die/das hergestellt werden soll, wobei die Verdichtung ferner das Einspritzen eines Harzes (360) in die Faservorform, die in dem Spritzgießwerkzeug (300) gehalten wird, die Umwandlung des Harzes in eine Matrix durch Wärmebehandlung, und die Entformung der Schaufel (10) oder des Propellerblatts umfasst, wobei die Entformung das Herausziehen des zumindest einen Einsatzelements (130) auf eine Weise umfasst, um einen hohlen Fuß (12) zu erhalten.

3. Verfahren nach Anspruch 1, wobei die Verdichtung der Vorform die Platzierung der Faservorform (200) in ein Spritzgießwerkzeug (300) umfasst, das die Form der Schaufel oder des Propellerblatts aufweist, die/das hergestellt werden soll, wobei die Verdichtung ferner das Einspritzen eines Harzes (360) in die Faservorform, die in dem Spritzgießwerkzeug (300) gehalten wird, die Umwandlung des Harzes in eine Matrix durch Wärmebehandlung, und die Entformung der Schaufel oder des Propellerblatts auf eine Weise umfasst, um einen Fuß (22) zu erhalten, der einen Hohlraum (24) mit dem zumindest einen, an das Innere des Hohlraums geklebten Einsatzelement (130) umfasst.

4. Verfahren nach Anspruch 3, wobei ein unterer Abschnitt des aerodynamischen Profilteils (411) des Faserrohlings (400) eine Entbindung (407) umfasst, die einen Durchgang (450) zwischen einem Rand (400b) des aerodynamischen Profilteils und der internen Fußaufnahme (440) umfasst, wobei die interne Fußaufnahme der Längsrichtung (DL) folgend einen ersten Abschnitt (441), dessen Querschnitt zwischen dem freien Ende (4122) des Fußteils (412) und einem Zwischenteil (443) der Aufnahme abnimmt, und einen zweiten Abschnitt (442) beinhaltet, dessen Querschnitt zwischen dem Zwischenteil und dem aerodynamischen Profilteil (411) zunimmt, wobei ein erster Teil (431) des Einsatzelements (430) eine ausgestellte Form aufweist, die in dem ersten Abschnitt (441) der internen Fußaufnahme (440) positioniert wird, ein zweiter Teil (432) des Einsatzelements eine ausgestellte Form aufweist, die in dem zweiten Abschnitt (442) der internen Fußaufnahme über den Durchgang (450), der in dem aerodynamischen Profilteil (411) vorliegt, positioniert wird.

5. Verfahren nach Anspruch 3 oder 4, wobei das Einsatzelement (130, 430) aus einem der folgenden Materialien besteht: Metallmaterial, Harz und Salz.

6. Schaufel oder Propellerblatt (10) eines Turboprops aus Verbundmaterial, umfassend eine Faserverstärkung, die durch eine Matrix verdichtet ist, wobei die Schaufel oder das Propellerblatt einer Spannweitenrichtung (DL) folgend einen Fuß (12) und ein aerodynamisches Profil (11) beinhalten, wobei die Faserverstärkung eine Faservorform (200) umfasst, die eine dreidimensionale Verwebung aufweist, mit einem Fußvorformteil (212), der in dem Fuß (12) vorliegt, und einem Vorformteil des aerodynamischen Profils (211), der in dem aerodynamischen Profil (11) vorliegt, wobei das Fußvorformteil und das Vorformteil des aerodynamischen Profils miteinander durch die dreidimensionale Verwebung auf eine Weise verbunden sind, dass der Fußvorformteil (212) der Faservorform (200) eine Entbindung (106) umfasst, welche eine interne Fußaufnahme (140) begrenzt, die einen Hohlraum (14) bildet, der an einem freien Ende (12a) des Fußes (12) ausmündet, wobei die Entbindung sich einer Querrichtung folgend zwischen ersten und zweiten Bindungsabschnitten (105, 107) erstreckt.

7. Schaufel oder Propellerblatt (20) nach Anspruch 6, ferner umfassend zumindest ein Einsatzelement (130), das an das Innere des Hohlraums (24) geklebt ist, der in dem Fuß (22) der Schaufel oder des Propellerblatts vorhanden ist.

8. Schaufel oder Propellerblatt (30) nach Anspruch 6 oder 7, wobei der Hohlraum (34) des Fußes (32) der Spannweitenrichtung (DL) folgend einen ersten Abschnitt (341), dessen Querschnitt zwischen dem freien Ende des Fußes (32) und einem Zwischenteil der Aufnahme abnimmt, und einen zweiten Abschnitt (342) beinhaltet, dessen Querschnitt zwischen dem Zwischenteil und dem aerodynamischen Profilteil (31) zunimmt, wobei ein erster Teil (431) des Einsatzelements (430) eine ausgestellte Form aufweist, die in dem ersten Abschnitt (341) des Hohlraums (34) vorliegt, ein zweiter Teil (432) des Einsatzelements eine ausgestellte Form aufweist, die in dem zweiten Abschnitt (342) des Hohlraum vorliegt.

9. Luftfahrzeugmotor umfassend mehrere Schaufeln oder Propellerblätter nach einem der Ansprüche 6 bis 8.

10. Luftfahrzeug umfassend zumindest einen Motor nach Anspruch 9.

## Claims

1. A manufacturing method for a propeller blade or airfoil (10) for a turboprop engine, of composite material, comprising a fibrous reinforcement densified by a matrix, the method comprising:
- producing a one-piece fibrous blank (100) by three-dimensional weaving, the fibrous blank having a flat shape extending in a longitudinal direction (D_{L}) and a transverse direction (D_{T}) corresponding respectively to the span direction and to the chord direction of the propeller blade or airfoil to be manufactured, the fibrous blank (100) comprising a root portion (112) and an aerodynamic profile portion (111) extending in the longitudinal direction (D_{L}) from the root portion and in the transverse direction (D_{T}) between a leading edge portion (100a) and a trailing edge portion (100b),
- forming the fibrous blank (100) for obtaining a one-piece fibrous preform (200) having said aerodynamic profile portion (111) forming an aerodynamic profile preform (211) and said root portion (112) forming a root preform portion (212), and
- densifying the fibrous preform (200) with a matrix for obtaining a propeller blade or airfoil (10), of composite material, having a fibrous reinforcement consisting of the fibrous preform (200) and densified by the matrix, and forming a single part with integrated root (12),
so that the root portion (112) of the fibrous blank (100) comprises an unlinked area (106) delimiting an internal root recess (140) opening at a free end (1122) of said root portion and extending in the longitudinal direction (D_{L}), said unlinked area extending in the transverse direction between a first lateral edge (1120) and a second lateral edge (1121) and recessed from said lateral edges, and in that the forming of the fibrous blank (100) comprises the positioning of at least one insertion element (130) in the internal root recess (140) so as to form a bulb-shaped root preform portion (212).

2. The method according to claim 1, wherein the densification of the preform comprises the placement of the fibrous preform (200) into injection tooling (300) having the shape of the propeller blade or airfoil to be manufactured, the densification also comprising the injection of a resin (360) into the fibrous preform held in the injection tooling (300), the transformation of the resin into a matrix by thermal treatment and the removal of the propeller blade (10) or airfoil from the mold, the removal from the mold comprising the removal of said at least one insertion element (130) so as to obtain a hollow root (12).

3. The method according to claim 1, wherein the densification of the preform comprises the placement of the fibrous preform (200) into injection tooling (300) having the shape of the propeller blade or airfoil to be manufactured, the densification also comprising the injection of a resin (360) into the fibrous preform held in the injection tooling (300), the transformation of the resin into a matrix by thermal treatment and the removal of the propeller blade or airfoil from the mold so as to obtain a root (22) comprising a cavity, (24) with said at least one insertion element (130) glued inside said cavity.

4. The method according to claim 3, wherein a lower portion of the aerodynamic profile portion (411) of the fibrous blank (400) comprises an unlinked area (407) delimiting a passage (450) between one edge (400b) of said aerodynamic profile portion and the internal root recess (440), said internal root recess including, in the longitudinal direction (D_{L}), a first portion (441), the cross section of which decreases between the free end (4122) of the root portion (412) and an intermediate portion (443) of the recess and a second portion (442), the cross section of which increases between said intermediate portion and the aerodynamic profile portion (411), a first portion (431) of the insertion element (430), having a flared shape, being positioned in the first portion (441) of the internal root recess (440), a second portion (432) of the insertion element having a flared shape being positioned in the second portion (442) of the internal root recess via the passage (450) present in the aerodynamic profile portion (411).

5. The method according to claim 3 or 4, wherein the insertion element (130, 430) is constituted of one of the following materials: metallic material, resin and salt.

6. A propeller (10) blade or airfoil, of a turboprop engine, of composite material comprising a fibrous reinforcement densified by a matrix, the propeller blade or airfoil including, in a span direction (D_{L}), a root (12) and an aerodynamic profile (11), the fibrous reinforcement comprising a fibrous preform (200) having a three-dimensional weave with a root preform portion (212) present in the root (12) and an aerodynamic profile portion (211) present in the aerodynamic profile (11), the root and aerodynamic profile preform portions being linked to one another by the three-dimensional weave, so that the root preform portion (212) of the fibrous preform (200) comprises an unlinked area (106) delimiting an internal root recess (140) forming a cavity (14) opening at a free end (12a) of the root (12), the unlinked area extending in a transverse direction between the first and second linking portions (105, 107).

7. The propeller blade or airfoil (20) according to claim 6, also comprising at least one insertion element (130) glued inside the cavity (24) present in the root (22) of the propeller blade or airfoil.

8. The propeller blade or airfoil (30) according to claim 6 or 7, wherein the cavity (34) of the root (32) includes, in the span direction (D_{L}), a first portion (341), the cross section of which decreases between the free end of the root (32) and an intermediate portion of the recess, and a second portion (342), the cross section of which increases between said intermediate portion and the aerodynamic profile (31), a first portion (431) of the insertion element (430), having a flared shape, being present in the first portion (341) of the cavity (34), a second portion (432) of the insertion element, having a flared shape, being present in the second portion (342) of said cavity.

9. An aeronautical engine comprising a plurality of propeller blades or airfoils according to any one of claims 6 to 8.

10. An aircraft comprising at least one engine according to claim 9.
